# EUROPEAN PATENT SPECIFICATION

(11) **EP 3 160 110 B1**
(45) Date of publication and mention of the grant of the patent: **22.05.2019**
(21) Application number: 14896104.8
(22) Date of filing: 25.11.2014
(51) Int. Cl.: H04L 29/08

(54) **FILE TRANSMISSION METHOD, APPARATUS AND STORAGE MEDIUM**
DATEIÜBERTRAGUNGSVERFAHREN UND -VORRICHTUNG UND SPEICHERMEDIUM
PROCÉDÉ ET APPAREIL DE TRANSMISSION DE FICHIERS ET SUPPORT DE STOCKAGE

(30) Priority: 23.06.2014 CN 201410283714
(43) Date of publication of application: 26.04.2017
(73) Proprietor: ZTE Corporation, Shenzhen, Guangdong 518057 (CN)
(72) Inventor: FANG, Wen, Shenzhen Guangdong 518057 (CN)
(74) Representative: Schröer, Gernot H.
(86) International application number: PCT/CN2014/092203
(87) International publication number: WO 2015/196727

(56) References cited:
- CN-A- 101 964 671
- CN-A- 103 108 007
- CN-A- 103 220 019
- CN-A- 103 713 739
- CN-A- 103 729 125
- US-A- 5 933 478
- US-A1- 2010 257 239

## Description

### Technical Field

The present invention relates to the field of file transmission control, in particular to a file transmission method and apparatus, a terminal, a wearable device and a computer storage medium.

### Background

A wearable device is a portable device which is directly put on a body or is integrated into user clothes or accessories. At present, in the field of wearable technology, the existing wearable device products include smart watches, smart glasses and smart wristbands, etc. As two types of commonly used portable electronic devices, information transmission and sharing between a wearable device and a mobile phone terminal are functions which are frequently used by a user. Almost all wearable devices have a function of communicating with mobile phones. Relevant communication is implemented usually through Bluetooth, wireless fidelity (wifi) or near-field communication (NFC).

User operation interfaces of the wearable devices are influenced by area of display areas and shapes of devices, which is usually inconvenient for users to directly and manually operate. For example, for the smart glasses, the existing Google glasses are operated by means of sound control, and the existing smart watches are most operated by virtue of touch screens and keys on side surfaces of the watches.

When the wearable devices are used for transmitting files, usually a file to be transmitted is selected first and then the file is transmitted. This mode has the advantage that the transmission of the file at each time reflects the user's demand for the file to a certain extent. Although the user can quickly find a file which needs to be transmitted on a touch screen or a keyboard of the mobile phone, due to limitations of the screen and operation interface on the wearable devices, troublesome file path confirmation operations often cause headache to users and low efficiency, mistakes are easily made and the user experience is relatively poor.

US 2010/0257239 A1 discloses Methods and apparatus for creating social networks include establishing a close range communication link between a first mobile device and a second mobile device and transmitting social network information from one mobile device to the other via the close range communication link.

CN 103108007 A discloses a document receiving method and a terminal equipment using the document receiving method.

US 5933478 A discloses a data transfer system and a handheld terminal device used therefor.

CN 101964671 A discloses an automatic test method for an electronic product Bluetooth function.

CN 103220019 A discloses a method for implementing Bluetooth transmission data and a mobile terminal.

### Summary of the Invention

In order to solve the existing technical problem, the embodiments of the present invention are to provide a file transmission method and apparatus, a terminal, a wearable device and a computer storage medium according to appended independent claims, such that automatic transmission of files can be realized and the problems of low efficiency and relatively poor user experience caused by troublesome file path confirmation operations are solved. Further improvements and embodiments are provided in the dependent claims.

Also provided is a file transmission method, applied to a first electronic device, including:
detecting whether an automatic file transmission condition is satisfied between the first electronic device and a second electronic device to obtain a first detection result; and
when the first detection result is used for representing that the automatic file transmission condition is satisfied between the first electronic device and the second electronic device, selecting a first file having a preset file attribute and transmitting the first file.

In the above-mentioned solution, the automatic file transmission condition is satisfied when it is detected that the first electronic device and the second electronic device are connected through a first communication mode; and
the preset file attribute is being at a preset first location or a preset first file type.

In the above-mentioned solution, when the first detection result is used for representing that the automatic file transmission condition is satisfied between the first electronic device and the second electronic device, the method further includes:
detecting whether first hardware of the first electronic device is in a preset first state used for starting file transmission to obtain a second detection result; and
selecting the first file having the preset file attribute and transmitting the first file such that the first file is started to be transmitted between the first electronic device and the second electronic device.

In the above-mentioned solution, the first hardware is a preset first key used for starting file transmission of the first electronic device or a light sensor.

In the above-mentioned solution, when the first detection result is used for representing that the automatic file transmission condition is satisfied between the first electronic device and the second electronic device, the method further includes:
receiving a third detection result sent by the second electronic device, herein the third detection result is used for representing that second hardware of the second electronic device is in a preset second state used for starting file transmission; and
after receiving the third detection result, selecting the first file having the preset file attribute such that the first file is started to be transmitted between the first electronic device and the second electronic device.

In the above-mentioned solution, the method further includes:
determining a first transmission direction of transmitting the first file according to a third state of third hardware on the first electronic device; and
directly selecting the first file having the preset file attribute and transmitting the first file according to the first transmission direction.

In the above-mentioned solution, the third hardware is at least one of a light sensor, a screen of the first electronic device and a second key used for setting the first transmission direction of the first electronic device.

In the above-mentioned solution, the method further includes:
receiving transmission direction information carrying a first transmission direction sent by the second electronic device, herein the first transmission direction is determined according to a fourth state of fourth hardware arranged on the second electronic device; and
selecting the first file having the preset file attribute and transmitting the first file according to the first transmission direction carried by the transmission direction information.

Also provided is a file transmission apparatus, applied to a first electronic device, including:
a first detection module arranged to detect whether an automatic file transmission condition is satisfied between the first electronic device and a second electronic device to obtain a first detection result; and
a file transmission module arranged to, when the first detection result generated by the first detection module is used for representing that the automatic file transmission condition is satisfied between the first electronic device and the second electronic device, select a first file having a preset file attribute and transmit the first file.

In the above-mentioned solution, the automatic file transmission condition is connection through a first communication mode; and
the preset file attribute is being at a preset first location or a preset first file type.

In the above-mentioned solution, the apparatus further includes:
a second detection module arranged to detect whether first hardware of the first electronic device is in a preset first state for starting file transmission to obtain a second detection result; and
correspondingly, the file transmission module includes: a first transmission sub-module arranged to, when the second detection result is used for representing that the first hardware is in the first state, select the first file having the preset file attribute and transmit the first file.

In the above-mentioned solution, the first hardware is a preset first key used for starting file transmission of the first electronic device or a light sensor.

In the above-mentioned solution, the apparatus further includes:
a first receiving module arranged to receive a third detection result sent by the second electronic device, herein the third detection result is used for representing that second hardware of the second electronic device is in a preset second state used for starting file transmission; and
correspondingly, the file transmission module includes:
   a second transmission sub-module arranged to, after receiving the third detection result, select the first file having the preset file attribute and transmit the first file.

In the above-mentioned solution, the apparatus further includes:
a determination module arranged to determine a first transmission direction of transmitting the first file according to a third state of third hardware on the first electronic device; and
correspondingly, the file transmission module includes: a third transmission sub-module arranged to select the first file having the preset file attribute and transmit the first file according to the first transmission direction.

In the above-mentioned solution, the third hardware is at least one of a light sensor, a screen of the first electronic device and a second key used for setting the first transmission direction of the first electronic device.

In the above-mentioned solution, the apparatus further includes:
a second receiving module arranged to receive transmission direction information carrying a first transmission direction sent by the second electronic device, herein the first transmission direction is determined according to a fourth state of fourth hardware arranged on the second electronic device; and
correspondingly, the file transmission module includes: a fourth transmission sub-module arranged to select the first file having the preset file attribute and transmit the first file according to the first transmission direction carried by the transmission direction information.

Also provided is a terminal, including the foresaid file transmission apparatus.

Also provided is a wearable device, including the foresaid file transmission apparatus.

Also provided is a computer storage medium, herein computer-executable instructions are stored in the computer storage medium, and the computer-executable instructions are used for executing the foresaid file transmission method.

In the embodiments of the present invention, a file at a first location or a file of a first file type is pre-designated as a first file which satisfies a preset file attribute, and when an automatic file transmission condition is satisfied between two electronic devices, the first file is started to be automatically transmitted. In addition, in the embodiments of the present invention, whether automatic file transmission needs to be started can be judged by detecting a state of certain hardware of any one of the two electronic devices, and further a direction of transmitting the file can be determined according to the state of the designated hardware of any one of the electronic devices, thereby automatic file transmission is more quickly and conveniently completed and the user experience is improved.

### Brief Description of Drawings

FIG. 1 is a schematic diagram of a flow of a file transmission method provided by an embodiment of the present invention.
FIG. 2 is another schematic diagram of a flow of a file transmission method provided by an embodiment of the present invention.
FIG. 3 is a schematic diagram of a light sensor implementing file transmission provided by an embodiment of the present invention.
FIG. 4 is a schematic diagram of processing interfaces after synchronization data type selection and synchronization provided by an embodiment of the present invention.
FIG. 5 is a schematic diagram of a structure of a file transmission apparatus provided by an embodiment of the present invention.

### Specific Embodiments

In order to enable the technical problem required to be solved by the embodiments of the present invention, the technical solution and the advantages to be clearer, detailed descriptions will be made in combination with the accompanying drawings and specific embodiments below.

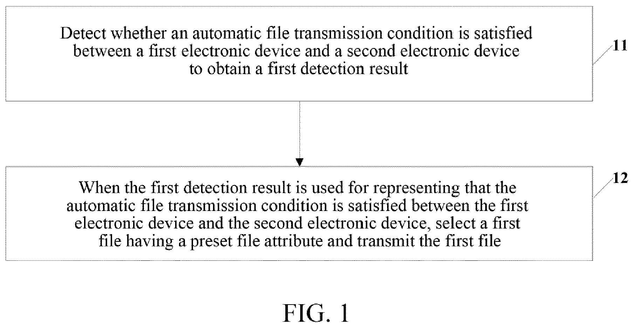

The embodiment of the present invention provides a file transmission method, which is applied to a first electronic device. The method is as illustrated in FIG. 1 and includes the following steps:
In step 11, whether an automatic file transmission condition is satisfied between the first electronic device and a second electronic device is detected to obtain a first detection result.
In step 12, when the first detection result is used for representing that the automatic file transmission condition is satisfied between the first electronic device and the second electronic device, a first file having a preset file attribute is selected and the first file is transmitted.

In the embodiment of the present invention, the first file which is automatically transmitted here is not temporarily designated during transmission but is a file which is preset and has a preset file attribute. As long as the automatic file transmission condition is satisfied between the first electronic device and the second electronic device, the first file is automatically transmitted. A user does not need to search a file to be transmitted, thereby automatic file transmission can be quickly completed and the user experience is improved.

Alternatively, the first electronic device is a terminal and the second electronic device is a wearable device, or the first electronic device is a wearable device and the second electronic device is a terminal, or the two electronic devices are simultaneously terminals or wearable devices.

In the above-mentioned file transmission method, the automatic file transmission condition is connection through a first communication mode.

The preset file attribute is being at a preset first location or a preset first file type.

With respect to the first communication mode, it may be a Bluetooth, wifi or near-field communication mode. Of course, it may also be other communication modes, as long as a function of communication between the first electronic device and the second electronic device can be executed to perform file transmission.

The first file having the preset file attribute may be a file which is preset at a first location of the first electronic device (or the second electronic device). For example, a file pre-designated on a desktop of the first electronic device (or the second electronic device) is the first file which may be automatically transmitted.

The first file having the preset file attribute may also be a file of the pre-designated first file type, and the first file type may be at least one of name card, picture, audio, video, short message or conversation record.

Of course, before whether the automatic file transmission condition is satisfied between the first electronic device and the second electronic device is detected, the first location of the first file which needs to be transmitted may be preset by the user, or the first file type may be selected or edited, etc. Here, the user is alternatively a user who simultaneously holds the first electronic device and the second electronic device.

In addition, in order to further improve the user experience, in the embodiment of the present invention, file transmission may be started through a plurality of shortcut operations performed by the user to the electronic devices. When it is determined that the user needs to start file transmission, the first file having the preset file attribute is selected and the selected first file is transmitted to the second electronic device. Specifically, the following two modes may be adopted for implementation.

### <Mode 1>

The user starts file transmission through the first electronic device, i.e., the method also includes:
when it is detected that the automatic file transmission file is satisfied between the first electronic device and the second electronic device, further detecting whether first hardware of the first electronic device is in a preset first state used for starting file transmission to obtain a second detection result; and
when the second detection result is used for representing that the first hardware is in the first state, selecting the first file having the preset file attribute and transmitting the first file to the second electronic device.

Herein, the first hardware is a preset first key used for starting file transmission of the first electronic device or a light sensor.

In actual application, the user may preset a starting condition of file transmission, e.g., when a certain key is pressed long, i.e., a time length of pressing the key exceeds a certain time length, or the light sensor arranged on the first electronic device is continuously covered twice for light sensing, it is determined that the file transmission needs to be started. Therefore, the first state may be that the first key is in a long-pressed state or may be that the light sensor is in a state of being continuously covered twice for light sensing, the first file having the preset file attribute is selected and the first file is transmitted, such that the first file is started to be transmitted between the first electronic device and the second electronic device. The first key may be reused with original keys such as a volume adjustment key, a display interface back key and the like in the first electronic device, and a key may also be added and used as the first key.

The above-mentioned situation is just an illustration about starting the file transmission. In actual application, whether to start the file transmission may also be determined by detecting whether other hardware of the first electronic device is in the designated first state. After the two electronic devices are connected through the first communication mode and the first electronic device detects that the first hardware is in the first state, the first file is started to be transmitted between the two electronic devices.

Of course, when the first state for starting file transmission of the first hardware is set, quick and simple operations should be alternatively selected as operations for starting file transmission, and too complex operations should not be set.

Corresponding to the mode 1, file transmission may be started through the second electronic device. A specific mode is as follow:

### <Mode 2>

The user starts file transmission through the second electronic device and needs to notify the first electronic device to start file transmission after start, i.e., the method also includes:
receiving a third detection result sent by the second electronic device, herein the third detection result is used for representing that second hardware of the second electronic device is in a preset second state used for starting file transmission; and
selecting the first file having the preset file attribute and transmitting the first file to the second electronic device.

The second electronic device detects a state of the second hardware thereof and notifies the first electronic device after it is determined that file transmission needs to be started. The user may preset the electronic device which is used for starting file transmission. Herein, the second hardware of the second electronic device and the second state may be understood by referring to the first hardware of the first electronic device and the first state; meanwhile, the method for the second electronic device detecting whether the second hardware thereof is in the preset second state may be understood by referring to the method for the first electronic device detecting whether the first hardware thereof is in the preset first state.

In the embodiment of the present invention, in addition to that file transmission is started by detecting the states of the hardware of the electronic devices, a file transmission direction may also be automatically controlled. The control of the file transmission direction may also be determined through the first electronic device or the second electronic device. Specific implementation modes are as follows:

### <First mode>

The method also includes:
determining a first transmission direction of transmitting the first file according to a third state of third hardware on the first electronic device; and
correspondingly, transmitting the selected first file having the preset file attribute according to the first transmission direction.

Herein, the third hardware is a light sensor, a screen or at least one second key which is used for representing the first transmission direction; the second key may be reused with a volume adjustment key in the first electronic device, a plurality of keys may also be additionally set and used for representing different transmission directions. The file transmission direction may be determined according to an activated state of the screen on the first electronic device, a sensing state of the light sensor or a specific state of the second key.

In the embodiment of the present invention, before the file is transmitted, firstly the first electronic device detects a state of a corresponding device thereof. Specifically, whether the screen of the first electronic device itself is in a lighted-up state may be detected, the magnitude of an illumination brightness value obtained by the light sensor may be detected, or whether the second key is long-pressed may be detected. State information is converted into a control code to be transmitted, and the first electronic device accordingly knows whether the first electronic device needs to actively transmit a file or passively wait for receiving.

If the first electronic device is a terminal, the first file transmission direction may also be determined by detecting whether a stylus is pulled out.

Of course, the above-mentioned situation is just an illustration about determining the file transmission direction. The user may determine the file transmission direction by presetting states of certain keys.

In addition to that the file transmission direction is determined through the first electronic device, the file transmission direction may also be determined through the second electronic device. The specific description is as follow.

### <Second mode>

The method also includes:
receiving transmission direction information carrying a first transmission direction sent by the second electronic device, herein the first transmission direction is determined according to a fourth state of fourth hardware arranged on the second electronic device; and
transmitting the selected first file having the preset file attribute according to the first transmission direction carried by the transmission direction information.

The fourth hardware of the second electronic device and the fourth state may be understood by referring to the third hardware of the first electronic device and the third state; meanwhile, the process of the second electronic device determining the file transmission direction is similar to the foresaid process of the first electronic device determining the file transmission direction, which will not be repetitively described here. After the second electronic device determines the first file transmission direction, the first electronic device is notified, such that the first electronic device determines whether the first electronic device needs to actively transmit the file or passively wait for receiving.

The above file transmission method will be described below in detail with an example that the first electronic device is a terminal and the second electronic device is a wearable device.

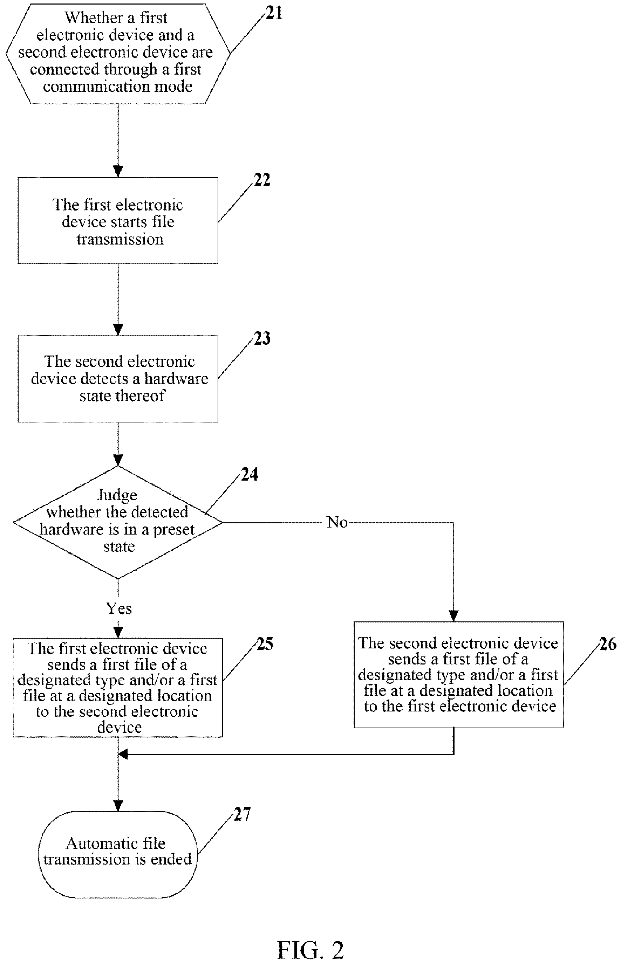

As illustrated in FIG. 2, a first electronic device determines whether to start file transmission and a second electronic device determines a file transmission direction. The specific file transmission method includes the following steps.

In step 21, whether the first electronic device and the second electronic device are connected through a first communication mode is detected.

In step 22, when the first electronic device and the second electronic device are connected through the first communication mode, file transmission is started on the first electronic device (terminal), starting the file transmission is different from the existing file selection and transmission, and a file does not be necessarily selected in this starting mode, which may be implemented very simply and conveniently through a one-key operation or preset operations performed to a specific first key.

In step 23, after receiving information for starting file transmission sent by the first electronic device (terminal), the second electronic device (wearable device) firstly queries a state of hardware thereof, e.g., it queries a value of a set light sensor sensing the external light, whether a screen is lighted up, and whether a certain key is operated by the user within the specified time, etc.

In step 24, whether the detected hardware is in a corresponding preset state is judged, if the detected hardware is in the corresponding preset state, step 25 is executed, and if the detected hardware is not in the corresponding preset state, step 26 is executed.

In step 25, the first electronic device (terminal) sends a first file of a certain designated type and/or a first file at a designated location to the second electronic device (wearable device).

In step 26, the second electronic device (wearable device) sends a first file of a certain designated type and/or a first file at a designated location to the first electronic device (terminal).

In step 27, automatic file transmission is ended.

In the above-mentioned process, the file of the certain designated type and/or at the designated location is the first file satisfying the preset file attribute, when the automatic file transmission condition is satisfied between the two electronic devices, i.e., when the two electronic devices are connected through the first communication mode, whether the automatic file transmission needs to be started may also be judged by detecting a state of certain hardware of any one of the two electronic devices, further the file transmission direction is determined through the state of the designated hardware of any one of the electronic devices, thereby the automatic file transmission is more quickly and conveniently completed and the user experience is improved.

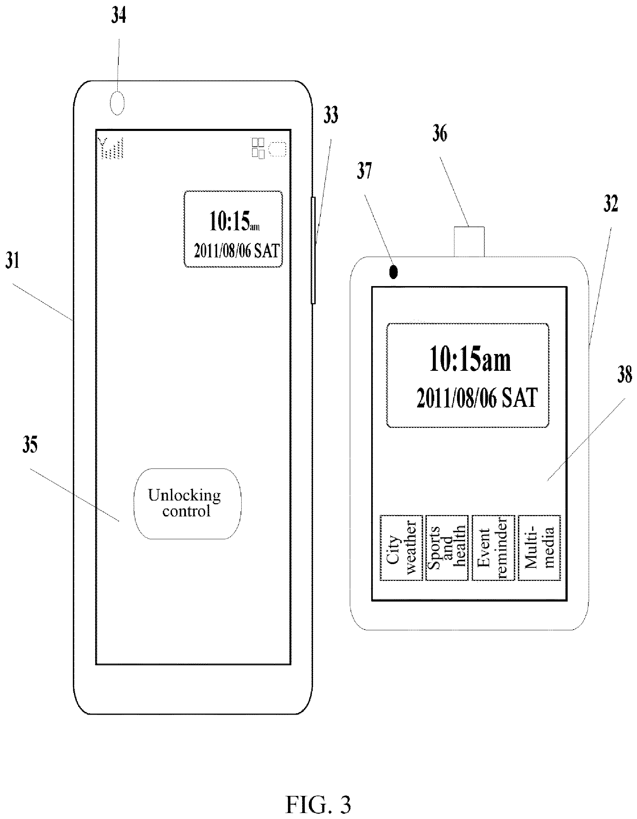

In the embodiment of the present invention, both the start of file transmission and the selection of the transmission direction may be completed through a simple one-key operation, and may be completed through various different hardware (devices). As illustrated in FIG. 3, it is a typical embodiment of implementing the function by virtue of a light sensor.

A mobile terminal 31 thereon is provided with a side key 33, a light sensor 34 and a screen 35; and a wearable device 32 thereon is provided with a key 36, a light sensor 37 and a screen 38.

When the mobile terminal 31 and the wearable device 32 are in a state of being connected through the first communication mode (for example, short-range communication states like wifi, near-field communication (NFC), Bluetooth or infrared), when the side key 33 on the mobile terminal 31 is pressed and simultaneously the light sensor 34 is covered (according to normal use habits, generally the user will not unconsciously performs a misoperation to cover the light sensor when pressing the side key, and thus the simultaneous occurrence of the two may be considered as a user's conscious operation in the embodiment), the mobile terminal 31 considers that the user starts a file transmission operation and sends a file transmission request to the wearable device 32.

After receiving the file transmission request sent by the mobile terminal 31, the wearable device 32 detects whether the light sensor 37 thereof is covered within a range of time, if the light sensor 37 is covered, judges that a file transmission direction is from the mobile terminal 31 to the wearable device 32 and transmits a corresponding control code to the mobile terminal 31; and contrarily, if the light sensor 37 of the wearable device is not covered, judges that the file transmission direction is from the wearable device 32 to the mobile terminal 31.

After the both parties clearly know a transmitting party and a receiving party of the file transmission, the transmitting party transmits a file at a specific file location and/or of a specific type to the receiving party according to a previous protocol.

In the embodiment of the present invention, a plurality of preset files such as contents including audio, images, texts, name cards and information may be quickly synchronized between the wearable device and the mobile terminal. Moreover, the operation is very simple. For example, the user only needs to put the surfaces of the mobile terminal and the wearable device face to face to enable the light sensor of one party to be covered by the opposite party, and then presses the corresponding key on the terminal, so that the synchronization of the specific file from the mobile terminal to the wearable device can be realized, which is very convenient.

Contrarily, if the surface of the wearable device is not covered and the light sensor can still sense an external light source, synchronization of the specific file from the wearable device to the mobile terminal will be quickly realized.

Similarly, in the embodiment of the present invention, the file transmission direction may also be determined according to states of other devices, e.g., according to whether the screen is activated: after the first electronic device starts file transmission, if the screen of the second electronic device is in an activated state, the file transmission direction is from the second electronic device to the first electronic device; and contrarily, if the screen of the second electronic device is in an inactivated state, the file transmission direction is from the first electronic device to the second electronic device.

This mode is simpler. When the user needs to transmit the specific file from the first electronic device to the second electronic device, transmission can be completed even without performing any operation to the second electronic device.

Similarly, device states such as a pulled-out state of a stylus, an unlocked state and an operated state of a specific key may be used as bases for judging the transmission direction. Since the embodiments are many and the major thought is approximately the same, no enumeration is made here.

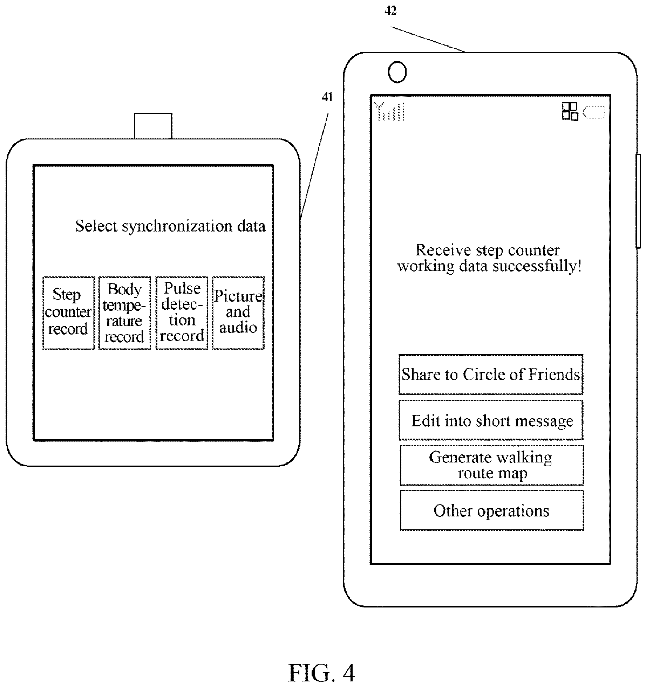

FIG. 4 is an embodiment description of a user operation interface for setting which type of file to be automatically transmitted before the file transmission occurs and a processing interface after the transmission in the embodiment of the present invention.

As illustrated in FIG. 4, a step counter is a common function on many wearable devices, particularly smart watches and wristbands. Sometimes, a user needs to synchronize such working data on a wearable device to a mobile phone terminal to perform further operation and sharing. Therefore, four file types, i.e., step counter, body temperature, pulse and other picture and audio which can be synchronized to a mobile terminal 42 through the method provided by the embodiment of the present invention are set on an interface of a smart watch 41 in the embodiment. In FIG. 4, step counter data are selected by default.

In the selected state illustrated in FIG. 4, once data transmission between the mobile terminal and the wearable device occurs according to the technical solution of the embodiment of the present invention and a transmission direction is from the wearable device to the mobile terminal, the wearable device will automatically send working records of the step counter thereof to a designated file folder of the mobile terminal.

After receiving the step counter records, the mobile terminal may perform corresponding operations such as sharing, short message editing and walking route generation to the step counter records, which is very convenient.

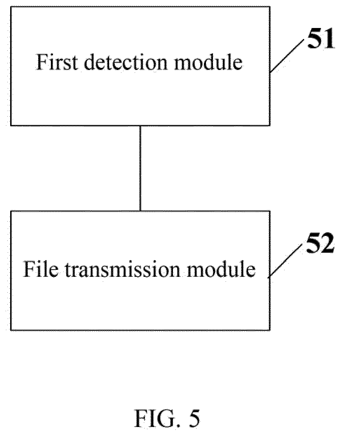

The embodiment of the present invention also provides a file transmission apparatus, applied to a first electronic device. The apparatus, as illustrated in FIG. 5, includes: a first detection module 51 and a file transmission module 52, herein,
the first detection module 51 is arranged to detect whether an automatic file transmission condition is satisfied between the first electronic device and a second electronic device to obtain a first detection result; and
the file transmission module 52 is arranged to, when the first detection result generated by the first detection module 51 is used for representing that the automatic file transmission condition is satisfied between the first electronic device and the second electronic device, select a first file having a preset file attribute and transmit the first file.

In the above file transmission apparatus, the automatic file transmission condition is connection through a first communication mode; and

### the preset file attribute is being at a preset first location or a preset first file type.

In the above file transmission apparatus, the apparatus also includes:
a second detection module, arranged to detect whether first hardware of the first electronic device is in a preset first state for starting file transmission to obtain a second detection result; and
the file transmission module 52 also includes a first transmission sub-module;
correspondingly, the first transmission sub-module is arranged to, when the second detection result generated by the second detection module is used for representing that the first hardware is in the first state, select the first file having the preset file attribute and transmit the first file.

In the above file transmission apparatus, the first hardware is a preset first key used for starting file transmission of the first electronic device or a light sensor.

In the above file transmission apparatus, the apparatus also includes:
a first receiving module, arranged to receive a third detection result sent by the second electronic device, herein the third detection result is used for representing that second hardware of the second electronic device is in a preset second state used for starting file transmission; and
the file transmission module 52 also includes:
   a second transmission sub-module arranged to, after receiving the third detection result, select the first file having the preset file attribute and transmit the first file, such that the first file is started to be transmitted between the first electronic device and the second electronic device.

In the above file transmission apparatus, the apparatus also includes:
a determination module, arranged to determine a first transmission direction of transmitting the first file according to a third state of third hardware on the first electronic device; and
the file transmission module 52 also includes:
   a third transmission sub-module, arranged to select the first file having the preset file attribute and transmit the first file according to the first transmission direction, such that the first file is started to be transmitted between the first electronic device and the second electronic device.

In the above file transmission apparatus, the third hardware is at least one of a light sensor, a screen of the first electronic device or a second key used for setting the first transmission direction of the first electronic device.

In the above file transmission apparatus, the apparatus also includes:
a second receiving module, arranged to receive transmission direction information carrying a first transmission direction sent by the second electronic device, herein the first transmission direction is determined according to a fourth state of fourth hardware arranged on the second electronic device; and
the file transmission module 52 also includes:
   a fourth transmission sub-module, arranged to select the first file having the preset file attribute and transmit the first file according to the first transmission direction carried by the transmission direction information, such that the first file is started to be transmitted between the first electronic device and the second electronic device.

In actual application, both the first detection module 51 and the file transmission module 52 may be implemented through a Central Processing Unit (CPU), a Digital Signal Processor (DSP), a Micro Processor Unit (MPU) or a Field Programmable Gate Array (FPGA); and the CPU, the DSP, the MPU and the FPGA may all be built in a terminal or a wearable device.

The embodiment of the present invention also provides a terminal, and the terminal includes the file transmission apparatus mentioned in any one of the items above.

The embodiment of the present invention also provides a wearable device, and the device includes the file transmission apparatus mentioned in any one of the items above.

The embodiment of the present invention also provides a computer storage medium, the computer storage medium stores computer-executable instructions, and the computer-executable instructions are used for executing the foresaid file transmission method.

The people skilled in the art shall understand that the embodiments of the present invention may be provided in the form of methods, systems or computer program products. Therefore, the present invention may adopt the form of hardware embodiments, software embodiments or embodiments of combining software and hardware aspects. In addition, the present invention may adopt the form of computer program products implemented on one or more computer usable memory media (including but not limited to disk memories and optical memories, etc.) containing computer usable program codes therein.

The present invention is described by referring to flowcharts and/or block diagrams of the methods, the apparatuses (systems) and the computer program products according to the embodiments of the present invention. It should be understood that each process and/or block in the flowcharts and/or block diagrams and a combination of processes and/or blocks in the flowcharts and/or block diagrams may be implemented through computer program instructions. These computer program instructions may be provided to general-purpose computers, special-purpose computers, embedded processors or processors of other programmable data processing devices to produce a machine, such that an apparatus used for realizing functions designated in one process or more processes of the flowcharts and/or one block or more blocks of the block diagrams is generated through the instructions executed by the computers or the processors of other programmable data processing devices.

These computer program instructions may also be stored in computer-readable memories which can guide computers or other programmable data processing devices to work in a specific manner, such that the instructions stored in the computer-readable memories produce products including instruction devices, and the instruction devices realize functions designated in one process or more processes of the flowcharts and/or one block or more blocks of the block diagrams.

These computer program instructions may also be loaded to computers or other programmable data processing devices, such that a series of operation steps are executed on the computers or other programmable devices to perform processing realized by the computers, such that the instructions which are executed on the computers or other programmable devices provide steps used for realizing functions designated in one process or more processes of the flowcharts and/or one block or more blocks of the block diagrams.

The above-mentioned descriptions are just preferred embodiments of the present invention and are not used for limiting the protection scope of the present invention.

### Industrial Applicability

In the embodiments of the present invention, when an automatic file transmission condition is satisfied between two electronic devices, a file at a pre-designated first location or a file of a pre-designated first file type is started to be automatically transmitted, thus automatic transmission of files is realized and the problems of low efficiency and relatively poor user experience caused by troublesome file path confirmation operations are solved. In addition, whether automatic file transmission needs to be started can be judged by detecting a state of certain hardware of any one of the two electronic devices, and further a direction of transmitting the file can be determined according to the state of the designated hardware of any one of the electronic devices, thereby automatic file transmission is more quickly and conveniently completed and the user experience is improved.

## Claims

1. A file transmission method, applied to a first electronic device, comprising:
detecting whether an automatic file transmission condition is satisfied by a connection between the first electronic device and a second electronic device to obtain a first detection result (11); and
when the first detection result is used for representing that the automatic file transmission condition is satisfied, selecting a first file having a preset file attribute and transmitting the first file (12),
**characterized in that**,
when the first detection result is used for representing that the automatic file transmission condition is satisfied, the method further comprises:
detecting whether first hardware of the first electronic device is in a preset first state used for starting file transmission to obtain a second detection result; and
when the second detection result is used for representing that the first hardware is in the first state, selecting the first file having the preset file attribute and transmitting the first file, such that the first file is started to be transmitted between the first electronic device and the second electronic device;
or
receiving a third detection result sent by the second electronic device, wherein the third detection result is used for representing that second hardware of the second electronic device is in a preset second state used for starting file transmission; and
after receiving the third detection result, selecting the first file having the preset file attribute, such that the first file is started to be transmitted between the first electronic device and the second electronic device.

2. The file transmission method according to claim 1, wherein, the automatic file transmission condition is satisfied when it is detected that the first electronic device and the second electronic device are connected through a first communication mode; and
the preset file attribute is: at a preset first location or a preset first file type.

3. The file transmission method according to claim 1, wherein, the first hardware is a preset first key used for starting file transmission of the first electronic device or a light sensor.

4. The file transmission method according to claim 1, wherein the method further comprises:
determining a first transmission direction of transmitting the first file according to a third state of third hardware on the first electronic device; and
directly selecting the first file having the preset file attribute and transmitting the first file according to the first transmission direction,
wherein, the third hardware is at least one of a light sensor, a screen of the first electronic device and a second key used for setting the first transmission direction of the first electronic device.

5. The file transmission method according to claim 1, wherein the method further comprises:
receiving transmission direction information carrying a first transmission direction sent by the second electronic device, wherein the first transmission direction is determined according to a fourth state of fourth hardware arranged on the second electronic device; and
selecting the first file having the preset file attribute and transmitting the first file according to the first transmission direction carried by the transmission direction information.

6. A file transmission apparatus, applied to a first electronic device, comprising:
a first detection module (51) arranged to detect whether an automatic file transmission condition is satisfied by a connection between the first electronic device and a second electronic device to obtain a first detection result; and
a file transmission module (52) arranged to, when the first detection result generated by the first detection module is used for representing that the automatic file transmission condition is satisfied, select a first file having a preset file attribute and transmit the first file,
**characterized in that**,
the apparatus further comprises: a second detection module arranged to detect whether first hardware of the first electronic device is in a preset first state for starting file transmission to obtain a second detection result; and
correspondingly, the file transmission module is further arranged to, when the second detection result is used for representing that the first hardware is in the first state, select the first file having the preset file attribute and transmit the first file;
or
the apparatus further comprises: a first receiving module arranged to receive a third detection result sent by the second electronic device, wherein the third detection result is used for representing that second hardware of the second electronic device is in a preset second state used for starting file transmission; and
correspondingly, the file transmission module comprises: a second transmission sub-module arranged to, after receiving the third detection result, select the first file having the preset file attribute and transmit the first file.

7. The file transmission apparatus according to claim 6, wherein, the automatic file transmission condition is connection through a first communication mode; and
the preset file attribute is: at a preset first location or a preset first file type.

8. The file transmission apparatus according to claim 6, wherein, the first hardware is a preset first key used for starting file transmission of the first electronic device or a light sensor.

9. The file transmission apparatus according to claim 6, wherein, the apparatus further comprises:
a determination module arranged to determine a first transmission direction of transmitting the first file according to a third state of third hardware on the first electronic device; and
correspondingly, the file transmission module comprises: a third transmission sub-module arranged to select the first file having the preset file attribute and transmit the first file according to the first transmission direction,
wherein, the third hardware is at least one of a light sensor, a screen of the first electronic device and a second key used for setting the first transmission direction of the first electronic device.

10. The file transmission apparatus according to claim 6, wherein, the apparatus further comprises:
a second receiving module arranged to receive transmission direction information carrying a first transmission direction sent by the second electronic device, wherein the first transmission direction is determined according to a fourth state of fourth hardware arranged on the second electronic device; and
correspondingly, the file transmission module comprises: a fourth transmission sub-module arranged to select the first file having the preset file attribute and transmit the first file according to the first transmission direction carried by the transmission direction information.

11. A computer storage medium, wherein computer-executable instructions are stored in the computer storage medium, and the computer-executable instructions are used for executing the file transmission method according to any one of claims 1-5.

## Patentansprüche

1. Dateiübertragungsverfahren, das auf eine erste elektronische Vorrichtung angewandt wird, umfassend:
Erfassen, ob eine automatische Dateiübertragungsbedingung von einer Verbindung zwischen der ersten elektronischen Vorrichtung und einer zweiten elektronischen Vorrichtung erfüllt wird, um ein erstes Erfassungsergebnis (11) zu erhalten; und
wenn das erste Erfassungsergebnis zur Darstellung verwendet wird, dass die automatische Dateiübertragungsbedingung erfüllt ist, Auswählen einer ersten Datei mit einem voreingestellten Dateiattribut und Übertragen der ersten Datei (12),
**dadurch gekennzeichnet, dass**
wenn das erste Erfassungsergebnis zur Darstellung verwendet wird, dass die automatische Dateiübertragungsbedingung erfüllt ist, das Verfahren ferner umfasst:
Erfassen, ob eine erste Hardware der ersten elektronischen Vorrichtung in einem voreingestellten ersten Zustand ist, der für das Starten der Dateiübertragung verwendet wird, um ein zweites Erfassungsergebnis zu erhalten; und wenn das zweite Erfassungsergebnis zur Darstellung verwendet wird, dass die erste Hardware in dem ersten Zustand ist,
Auswählen der ersten Datei mit dem voreingestellten Dateiattribut und Übertragen der ersten Datei, so dass die Übertragung der ersten Datei zwischen der ersten elektronischen Vorrichtung und der zweiten elektronischen Vorrichtung gestartet wird;
oder
Empfangen eines dritten Erfassungsergebnisses, das von der zweiten elektronischen Vorrichtung gesendet wird, wobei das dritte Erfassungsergebnis zur Darstellung verwendet wird, dass eine zweite Hardware der zweiten elektronischen Vorrichtung in einem voreingestellten zweiten Zustand ist, der zum Starten der Dateiübertragung verwendet wird; und
nach dem Empfang des dritten Erfassungsergebnisses, Auswählen der ersten Datei mit dem voreingestellten Dateiattribut, so dass die Übertragung der ersten Datei zwischen der ersten elektronischen Vorrichtung und der zweiten elektronischen Vorrichtung gestartet wird.

2. Dateiübertragungsverfahren nach Anspruch 1, wobei die automatische Dateiübertragungsbedingung erfüllt ist, wenn erfasst wird, dass die erste elektronische Vorrichtung und die zweite elektronische Vorrichtung durch einen ersten Kommunikationsmodus verbunden sind; und
das voreingestellte Dateiattribut ist: an einer voreingestellten ersten Position oder eine voreingestellte erste Dateiart.

3. Dateiübertragungsverfahren nach Anspruch 1, wobei die erste Hardware ein voreingestellter erster Schlüssel ist, der für das Starten der Dateiübertragung der ersten elektronischen Vorrichtung verwendet wird, oder ein Lichtsensor ist.

4. Dateiübertragungsverfahren nach Anspruch 1, wobei das Verfahren ferner umfasst:
Bestimmen einer ersten Übertragungsrichtung des Übertragens der ersten Datei gemäß einem dritten Zustand einer dritten Hardware auf der ersten elektronischen Vorrichtung; und
direktes Auswählen der ersten Datei mit dem voreingestellten Dateiattribut und Übertragen der ersten Datei gemäß der ersten Übertragungsrichtung, wobei die dritte Hardware wenigstens entweder ein Lichtsensor, ein Bildschirm der ersten elektronischen Vorrichtung oder ein zweiter Schlüssel ist, die für die Einstellung der ersten Übertragungsrichtung der ersten elektronischen Vorrichtung verwendet werden.

5. Dateiübertragungsverfahren nach Anspruch 1, wobei das Verfahren ferner umfasst:
Empfangen einer Übertragungsrichtungsinformation, die eine erste Übertragungsrichtung trägt und die von der zweiten elektronischen Vorrichtung gesendet wird, wobei die erste Übertragungsrichtung gemäß einem vierten Zustand einer vierten Hardware bestimmt wird, die an der zweiten elektronischen Vorrichtung angeordnet ist; und
Auswählen der ersten Datei mit dem voreingestellten Dateiattribut und Übertragen der ersten Datei gemäß der ersten Übertragungsrichtung, die von der Übertragungsrichtungsinformation getragen wird.

6. Dateiübertragungsgerät, das auf eine erste elektronische Vorrichtung angewandt wird, umfassend:
ein erstes Erfassungsmodul (51), das dazu angeordnet ist, zu erfassen, ob eine automatische Dateiübertragungsbedingung von einer Verbindung zwischen der ersten elektronischen Vorrichtung und einer zweiten elektronischen Vorrichtung erfüllt wird, um ein erstes Erfassungsergebnis zu erhalten; und
ein Dateiübertragungsmodul (52), das dazu angeordnet ist, wenn das erste Erfassungsergebnis, das von dem ersten Erfassungsmodul erzeugt wird, zur Darstellung verwendet wird, dass die automatische Dateiübertragungsbedingung erfüllt ist, Auswählen einer ersten Datei mit einem voreingestellten Dateiattribut und Übertragen der ersten Datei,
**dadurch gekennzeichnet, dass**
das Gerät ferner umfasst: ein zweites Erfassungsmodul, das dazu angeordnet ist, zu erfassen, ob eine erste Hardware der ersten elektronischen Vorrichtung in einem voreingestellten ersten Zustand zum Starten der Dateiübertragung ist, um ein zweites Erfassungsergebnis zu erhalten; und
entsprechend das Dateiübertragungsmodul ferner dazu angeordnet ist, wenn das zweite Erfassungsergebnis zur Darstellung verwendet wird, dass die erste Hardware in dem ersten Zustand ist, Auswählen der ersten Datei mit dem voreingestellten Dateiattribut und Übertragen der ersten Datei;
oder
das Gerät ferner umfasst: ein erstes Empfangsmodul, das dazu angeordnet ist, ein drittes Erfassungsergebnis zu empfangen, das von der zweiten elektronischen Vorrichtung gesendet wird, wobei das dritte Erfassungsergebnis zur Darstellung verwendet wird, dass eine zweite Hardware der zweiten elektronischen Vorrichtung in einem voreingestellten zweiten Zustand ist, der zum Starten der Dateiübertragung verwendet wird; und
entsprechend das Dateiübertragungsmodul umfasst: ein zweites Übertragungs-Untermodul, das dazu angeordnet ist, nach dem Empfang des dritten Erfassungsergebnisses die erste Datei mit dem voreingestellten Dateiattribut auszuwählen und die erste Datei zu übertragen.

7. Dateiübertragungsgerät nach Anspruch 6, wobei die automatische Dateiübertragungsbedingung eine Verbindung durch einen ersten Kommunikationsmodus ist; und
das voreingestellte Dateiattribut ist: an einer voreingestellten ersten Position oder eine voreingestellte erste Dateiart.

8. Dateiübertragungsgerät nach Anspruch 6, wobei die erste Hardware ein voreingestellter erster Schlüssel ist, der für das Starten der Dateiübertragung der ersten elektronischen Vorrichtung verwendet wird, oder ein Lichtsensor ist.

9. Dateiübertragungsgerät nach Anspruch 6, wobei das Gerät ferner umfasst:
ein Bestimmungsmodul, das dazu angeordnet ist, eine erste Übertragungsrichtung des Übertragens der ersten Datei gemäß einem dritten Zustand einer dritten Hardware auf der ersten elektronischen Vorrichtung zu bestimmen; und
entsprechend das Dateiübertragungsmodul umfasst: ein drittes Übertragungs-Untermodul, das dazu angeordnet ist, die erste Datei mit dem voreingestellten Dateiattribut auszuwählen und die erste Datei gemäß der ersten Übertragungsrichtung zu übertragen,
wobei die dritte Hardware wenigstens entweder ein Lichtsensor, ein Bildschirm der ersten elektronischen Vorrichtung oder ein zweiter Schlüssel ist, die für die Einstellung der ersten Übertragungsrichtung der ersten elektronischen Vorrichtung verwendet werden.

10. Dateiübertragungsgerät nach Anspruch 6, wobei das Gerät ferner umfasst:
ein zweites Empfangsmodul, das dazu angeordnet ist, eine Übertragungsrichtungsinformation, die eine erste Übertragungsrichtung trägt und die von der zweiten elektronischen Vorrichtung gesendet wird, zu empfangen, wobei die erste Übertragungsrichtung gemäß einem vierten Zustand einer vierten Hardware bestimmt wird, die an der zweiten elektronischen Vorrichtung angeordnet ist; und
entsprechend das Dateiübertragungsmodul umfasst: ein viertes Übertragungs-Untermodul, das dazu angeordnet ist, die erste Datei mit dem voreingestellten Dateiattribut auszuwählen und die erste Datei gemäß der ersten Übertragungsrichtung, die von der Übertragungsrichtungsinformation getragen wird, zu übertragen.

11. Computerspeichermedium, wobei computer-ausführbare Anweisungen in dem Computerspeichermedium gespeichert sind, und die computer-ausführbaren Anweisungen zum Ausführen des Dateiübertragungsverfahrens nach einem der Ansprüche 1 bis 5 verwendet werden.

## Revendications

1. Procédé de transmission de fichier, appliqué à un premier dispositif électronique, comprenant:
détecter si une condition de transmission de fichier automatique est ou non satisfaite par une connexion entre le premier dispositif électronique et un second dispositif électronique pour obtenir un premier résultat de détection (11); et
lorsque le premier résultat de détection est utilisé pour représenter le fait que la condition de transmission de fichier automatique est satisfaite, sélectionner un premier fichier ayant un attribut de fichier prédéfini et transmettre le premier fichier (12),
**caractérisé par le fait que**,
lorsque le premier résultat de détection est utilisé pour représenter **le fait que** la condition de transmission de fichier automatique est satisfaite, le procédé comprend en outre:
détecter si un premier matériel du premier dispositif électronique est ou non dans un premier état prédéfini utilisé pour démarrer une transmission de fichier afin d'obtenir un deuxième résultat de détection; et
lorsque le deuxième résultat de détection est utilisé pour représenter **le fait que** le premier matériel est dans le premier état, sélectionner le premier fichier ayant l'attribut de fichier prédéfini et transmettre le premier fichier, de telle sorte que la transmission du premier fichier est démarrée entre le premier dispositif électronique et le second dispositif électronique;
ou
recevoir un troisième résultat de détection envoyé par le second dispositif électronique, le troisième résultat de détection étant utilisé pour représenter le fait qu'un deuxième matériel du second dispositif électronique est dans un deuxième état prédéfini utilisé pour démarrer une transmission de fichier; et
après la réception du troisième résultat de détection, sélectionner le premier fichier ayant l'attribut de fichier prédéfini, de telle sorte que la transmission du premier fichier est démarrée entre le premier dispositif électronique et le second dispositif électronique.

2. Procédé de transmission de fichier selon la revendication 1, dans lequel la condition de transmission de fichier automatique est satisfaite lorsqu'il est détecté que le premier dispositif électronique et le second dispositif électronique sont connectés par l'intermédiaire d'un premier mode de communication; et
l'attribut de fichier prédéfini est: à un premier emplacement prédéfini ou un premier type de fichier prédéfini.

3. Procédé de transmission de fichier selon la revendication 1, dans lequel le premier matériel est une première touche prédéfinie utilisée pour démarrer une transmission de fichier du premier dispositif électronique ou un capteur de lumière.

4. Procédé de transmission de fichier selon la revendication 1, le procédé comprenant en outre:
déterminer une première direction de transmission du premier fichier selon un troisième état d'un troisième matériel sur le premier dispositif électronique; et
sélectionner directement le premier fichier ayant l'attribut de fichier prédéfini et transmettre le premier fichier selon la première direction de transmission, le troisième matériel étant au moins l'un parmi un capteur de lumière, un écran du premier dispositif électronique et une seconde touche utilisée pour régler la première direction de transmission du premier dispositif électronique.

5. Procédé de transmission de fichier selon la revendication 1, le procédé comprenant en outre:
recevoir des informations de direction de transmission transportant une première direction de transmission envoyées par le second dispositif électronique, la première direction de transmission étant déterminée selon un quatrième état d'un quatrième matériel agencé sur le second dispositif électronique; et
sélectionner le premier fichier ayant l'attribut de fichier prédéfini et transmettre le premier fichier selon la première direction de transmission transportée par les informations de direction de transmission.

6. Appareil de transmission de fichier, appliqué à un premier dispositif électronique, comprenant:
un premier module de détection (51) conçu pour détecter si une condition de transmission de fichier automatique est ou non satisfaite par une connexion entre le premier dispositif électronique et un second dispositif électronique pour obtenir un premier résultat de détection; et
un module de transmission de fichier (52) conçu pour, lorsque le premier résultat de détection généré par le premier module de détection est utilisé pour représenter le fait que la condition de transmission de fichier automatique est satisfaite, sélectionner un premier fichier ayant un attribut de fichier prédéfini et transmettre le premier fichier,
**caractérisé par le fait que**,
l'appareil comprend en outre: un second module de détection conçu pour détecter si un premier matériel du premier dispositif électronique est ou non dans un premier état prédéfini pour démarrer une transmission de fichier afin d'obtenir un deuxième résultat de détection; et
de manière correspondante, le module de transmission de fichier est en outre conçu pour, lorsque le deuxième résultat de détection est utilisé pour représenter **le fait que** le premier matériel est dans le premier état, sélectionner le premier fichier ayant l'attribut de fichier prédéfini et transmettre le premier fichier;
ou
l'appareil comprend en outre: un premier module de réception conçu pour recevoir un troisième résultat de détection envoyé par le second dispositif électronique, le troisième résultat de détection étant utilisé pour représenter le fait qu'un deuxième matériel du second dispositif électronique est dans un deuxième état prédéfini utilisé pour démarrer une transmission de fichier; et un deuxième sous-module de transmission conçu pour, après la réception du troisième résultat de détection, sélectionner le premier fichier ayant l'attribut de fichier prédéfini et transmettre le premier fichier.

7. Appareil de transmission de fichier selon la revendication 6, dans lequel la condition de transmission de fichier automatique est une connexion par l'intermédiaire d'un premier mode de communication; et
l'attribut de fichier prédéfini est: à un premier emplacement prédéfini ou un premier type de fichier prédéfini.

8. Appareil de transmission de fichier selon la revendication 6, dans lequel le premier matériel est une première touche prédéfinie utilisée pour démarrer une transmission de fichier du premier dispositif électronique ou un capteur de lumière.

9. Appareil de transmission de fichier selon la revendication 6, l'appareil comprenant en outre:
un module de détermination conçu pour déterminer une première direction de transmission du premier fichier selon un troisième état d'un troisième matériel sur le premier dispositif électronique; et
de manière correspondante, le module de transmission de fichier comprenant: un troisième sous-module de transmission conçu pour sélectionner le premier fichier ayant l'attribut de fichier prédéfini et transmettre le premier fichier selon la première direction de transmission, le troisième matériel étant au moins l'un parmi un capteur de lumière, un écran du premier dispositif électronique et une seconde touche utilisée pour régler la première direction de transmission du premier dispositif électronique.

10. Appareil de transmission de fichier selon la revendication 6, l'appareil comprenant en outre:
un second module de réception conçu pour recevoir des informations de direction de transmission transportant une première direction de transmission envoyées par le second dispositif électronique, la première direction de transmission étant déterminée selon un quatrième état d'un quatrième matériel agencé sur le second dispositif électronique; et
de manière correspondante, le module de transmission de fichier comprenant: un quatrième sous-module de transmission conçu pour sélectionner le premier fichier ayant l'attribut de fichier prédéfini et transmettre le premier fichier selon la première direction de transmission transportée par les informations de direction de transmission.

11. Support de stockage informatique, dans lequel des instructions pouvant être exécutées par ordinateur sont stockées dans le support de stockage informatique, et les instructions pouvant être exécutées par ordinateur sont utilisées pour exécuter le procédé de transmission de fichier selon l'une quelconque des revendications 1 à 5.
